# EUROPÄISCHE PATENTANMELDUNG

(11) **EP 4 796 383 A1**
(43) Veröffentlichungstag der Anmeldung: **26.08.2026**
(21) Anmeldenummer: 26159764.5
(22) Anmeldetag: 20.02.2026
(51) Int. Cl.: B60Q 1/04, B60Q 1/26, F16B 5/02

(54) **VERBINDUNGSELEMENT, KRAFTFAHRZEUG MIT VERBINDUNGSELEMENT UND VERFAHREN ZUR MONTAGE EINES SCHEINWERFERS MITTELS VERBINDUNGSELEMENT**

(30) Priorität: 25.02.2025 CZ 20250062
(71) Anmelder: Skoda Auto a.s., 29301 Mladá Boleslav (CZ)
(72) Erfinder: Vinklarek, David, 51101 Turnov (CZ)

(57) **Zusammenfassung**

Verbindungselement (12) zur Befestigung eines Bauteils an einer Karosserie (14), das einen Körper (1) mit mindestens einer Öffnung zum Durchführen einer Schraube (9) mit einer Vertiefung zum Versenken des Schraubenkopfes (11) und eine Einsatzbuchse (2) mit einer Öffnung (6), die am Körper (1) befestigt ist, umfasst. Der Körper (1) mit der Einsatzbuchse (2) ist ebenensymmetrisch zu der Ebene, in der die Achse der Öffnung (6) der Einsatzbuchse (2) liegt. Ein Kraftfahrzeug (13) mit einer Karosserie (14) mit zwei Aussparungen (15) für Scheinwerfer (18), zwei Scheinwerfern (18) und mindestens zwei Verbindungselementen (12), wobei das Verbindungselement (12) an der Karosserie (14) an der Aussparung (15) befestigt ist und der Scheinwerfer (18) am Verbindungselement (12), insbesondere an der Einsatzbuchse (2) mit Öffnung (6), befestigt ist. Verfahren zur Montage des Scheinwerfers (18) an der Karosserie (14) mittels Verbindungselementen (12), das den Schritt der Befestigung der Verbindungselemente (12) an der Karosserie (14) an der Aussparung (15) und den Schritt der Befestigung der Scheinwerfer (18) in der Aussparung (15) der Karosserie (14) des Fahrzeugs (13) umfasst.

## Beschreibung

### Technisches Gebiet

Diese Erfindung betrifft ein symmetrisches Verbindungselement zur Befestigung eines Bauteils an der Karosserie eines Kraftfahrzeugs.

### Stand der Technik

Im Stand der Technik werden verschiedene Bauteile, wie zum Beispiel Scheinwerfer, direkt an der Karosserie des Fahrzeugs verschraubt. Beispielsweise wird im Dokument US6074080 A ein Rücklicht beschrieben, das auf einer Seite des Fahrzeugs befestigt werden kann und nach einer Drehung um 180° auf der anderen Seite angebracht werden kann. Ein Nachteil des aktuellen Standes der Technik besteht darin, dass das Rücklicht für einen bestimmten Karosserietyp geformt ist und nicht an einem anderen Karosserietyp befestigt werden kann. Es wäre daher wünschenswert, eine Lösung zu finden, die es ermöglicht, den Scheinwerfer an verschiedenen Typen und Formen von Karosserien zu befestigen, ohne dass der Scheinwerfer oder die Karosserie nachträglich geschliffen oder anderweitig bearbeitet werden muss. Ebenso wäre eine Lösung vorteilhaft, die eine einfache Montage des Scheinwerfers an der Karosserie ermöglicht.

### Wesen der Erfindung

Die beschriebenen Mängel der aus dem Stand der Technik bekannten Lösungen werden durch ein Verbindungselement zur Befestigung eines Bauteils an der Karosserie eines Kraftfahrzeugs zumindest teilweise beseitigt. Das Verbindungselement zur Befestigung eines Bauteils an der Karosserie eines Kraftfahrzeugs umfasst einen Körper mit mindestens einer Durchgangsöffnung zum Durchführen einer Schraube und eine Einsatzbuchse mit einer Öffnung, die ein Innengewinde zur Verschraubung eines Bauteils aufweist. Der Körper des Verbindungselements enthält an jedem Ende der Durchgangsöffnung eine Vertiefung zum Versenken des Schraubenkopfes. Die Einsatzbuchse mit Öffnung ist am Körper des Verbindungselements befestigt. Die Achse der Öffnung der Einsatzbuchse steht bei Betrachtung senkrecht zur Achse der Öffnung der Einsatzbuchse und zur Achse der Durchgangsöffnung mit der Achse der Durchgangsöffnung zum Durchführen der Schraube in einem Winkel von 90°. Der Körper mit der Einsatzbuchse mit Öffnung ist ebenensymmetrisch zu der Ebene, in der die Achse der Öffnung der Einsatzbuchse liegt.

Der Körper des Verbindungselements kann eine regelmäßige Form haben, beispielsweise die Form eines Quaders. Vorteilhafterweise weist der Körper des Verbindungselements jedoch eine unregelmäßige, jedoch ebenensymmetrische Form auf. Die Dicke und die Höhe des Körpers des Verbindungselements können an jeder Stelle des Körpers unterschiedlich sein. Die Dicke des Körpers des Verbindungselements kann parallel zur Achse der Durchgangsöffnung des Körpers des Verbindungselements verlaufen. Die Höhe kann senkrecht zur Achse der Durchgangsöffnung des Körpers des Verbindungselements und gleichzeitig senkrecht zur Achse der Öffnung mit Gewinde der Einsatzbuchse des Verbindungselements verlaufen. Vorteilhafterweise nimmt die Dicke des Körpers des Verbindungselements in Richtung von der Einsatzbuchse ab. Vorteilhafterweise nimmt die Höhe des Körpers des Verbindungselements in Richtung von der Einsatzbuchse ab.

Der Körper enthält mindestens eine Durchgangsöffnung zum Durchführen einer Schraube. Der Körper kann jedoch auch mehr als eine Durchgangsöffnung enthalten. Der Körper kann zwei Durchgangsöffnungen oder auch mehr als zwei Durchgangsöffnungen enthalten. Wenn der Körper mehr als eine Durchgangsöffnung enthält, sind die Achsen aller Durchgangsöffnungen des Körpers des Verbindungselements vorzugsweise zueinander parallel.

Die Durchgangsöffnung des Körpers des Verbindungselements ist vorzugsweise rund. Die Durchgangsöffnung des Körpers des Verbindungselements hat vorzugsweise einen größeren Durchmesser als der Durchmesser des Schafts der Schraube, die durch diese Durchgangsöffnung geführt werden kann. Der Durchmesser der Durchgangsöffnung des Körpers des Verbindungselements ist vorzugsweise kleiner als der Durchmesser des Schraubenkopfes, der durch die Durchgangsöffnung geführt werden soll.

An jedem Ende der Durchgangsöffnung des Körpers des Verbindungselements enthält der Körper eine Vertiefung zum Versenken des Schraubenkopfes. Die Schraube kann somit durch die Durchgangsöffnung des Körpers des Verbindungselements von links nach rechts oder von rechts nach links geführt werden. Wenn der Körper des Verbindungselements mehr als eine Durchgangsöffnung zum Durchführen der Schraube enthält, werden vorzugsweise alle Schrauben durch die entsprechenden Öffnungen in gleicher Richtung geführt, das heißt, die Köpfe aller Schrauben zeigen in eine Richtung (zum Beispiel nach links) und die Schäfte aller Schrauben zeigen in die andere Richtung (zum Beispiel nach rechts).

Die Einsatzbuchse mit einer Öffnung, die ein Innengewinde zur Verschraubung eines Bauteils aufweist, ist am Körper des Verbindungselements befestigt. Die Einsatzbuchse mit Öffnung kann am Körper abnehmbar befestigt sein. Vorteilhafterweise ist die Einsatzbuchse mit Öffnung jedoch unlösbar am Körper des Verbindungselements befestigt. Die Einsatzbuchse mit Öffnung kann am Körper angeklebt oder angeschweißt usw. sein.

Die Einsatzbuchse kann aus demselben Material wie der Körper des Verbindungselements bestehen, vorzugsweise ist die Einsatzbuchse jedoch aus einem anderen Material als der Körper des Verbindungselements gefertigt. Die Einsatzbuchse besteht vorzugsweise aus einem mechanisch widerstandsfähigen Material, wie zum Beispiel Metall usw. Der Körper des Verbindungselements kann aus einem zähen Material bestehen, wie zum Beispiel Kunststoff usw.

Die Einsatzbuchse hat vorzugsweise die Form eines Zylinders, der eine Öffnung mit Innengewinde enthält. Die Achse der Öffnung mit Gewinde ist vorzugsweise identisch mit der Achse des Zylinders der Einsatzbuchse. Die Öffnung mit Gewinde kann vollständig durchgehend sein oder nur an einem Ende offen sein. Die Tiefe der Öffnung mit Gewinde kann mindestens 5 mm betragen, vorzugsweise beträgt die Tiefe der Öffnung mit Innengewinde mindestens 10 mm, besonders bevorzugt mindestens 15 mm.

Bei einer Betrachtung senkrecht zur Achse der Öffnung der Einsatzbuchse und zur Achse der Durchgangsöffnung des Körpers des Verbindungselements ist die Achse der Durchgangsöffnung senkrecht zur Achse der Einsatzbuchse. Die Betrachtung senkrecht zur Achse der Einsatzbuchse und zur Achse der Durchgangsöffnung kann eine Draufsicht (bzw. Unteransicht) sein, wenn das Verbindungselement zur Befestigung eines Scheinwerfers an der Karosserie verwendet wird. Die Achse der Öffnung der Einsatzbuchse muss die Achse der Durchgangsöffnung des Körpers des Verbindungselements nicht schneiden, die Achsen können auch windschief zueinander stehen.

Der Körper mit der Einsatzbuchse ist ebenensymmetrisch zu der Ebene, in der die Achse der Öffnung der Einsatzbuchse liegt. Der Körper mit der Einsatzbuchse ist vorzugsweise ebenensymmetrisch zu einer vertikalen Ebene. Die linke Hälfte des Körpers und der Einsatzbuchse ist vorzugsweise identisch mit der rechten Hälfte des Körpers und der Einsatzbuchse des Verbindungselements.

Mit dem Verbindungselement kann ein Scheinwerfer an der Karosserie befestigt werden. Über das Verbindungselement kann jedoch auch ein anderes Bauteil als der Scheinwerfer an der Karosserie befestigt werden, beispielsweise ein Kabelbaum des Fahrzeugs, eine Halterung für den Kabelbaum oder eine Steuereinheit usw. Besonders vorteilhaft ist die Verwendung des Verbindungselements zur Befestigung von Bauteilen an der Karosserie, wenn es sich um zwei Bauteile handelt, eines für die rechte und eines für die linke Seite, wobei beide Bauteile spiegelbildlich identisch sein können. Dank der ebenensymmetrischen Ausführung des Verbindungselements kann die Montage des Bauteils an der Karosserie erleichtert werden, da es nicht notwendig ist, ein Verbindungselement für die linke Seite und ein Verbindungselement für die rechte Seite zu verwenden; das ebenensymmetrische Verbindungselement kann sowohl an der linken als auch an der rechten Seite der Karosserie befestigt werden.

Ein Vorteil des Verbindungselements besteht darin, dass dank seiner symmetrischen Form bezüglich der Ebene, in der die Achse der Öffnung der Einsatzbuchse liegt, zwei Verbindungselemente spiegelbildlich an der Karosserie eines Fahrzeugs befestigt werden können, beispielsweise auf der rechten und linken Seite dieser Karosserie usw. Aufgrund dieser Symmetrie ist es nicht notwendig, ein Verbindungselement für die linke Seite der Karosserie und ein Verbindungselement für die rechte Seite der Karosserie herzustellen. Das symmetrische Verbindungselement kann sowohl für die linke als auch für die rechte Seite der Karosserie verwendet werden.

Ein weiterer Vorteil des Verbindungselements ist seine einfache Montage an der Karosserie eines Fahrzeugs. Das Verbindungselement kann einfach mit einer Schraube an der Karosserie des Fahrzeugs befestigt werden. Das entsprechende Bauteil kann einfach am Verbindungselement, insbesondere an der Einsatzbuchse des Verbindungselements, angeschraubt werden.

Der Körper des Verbindungselements enthält vorzugsweise mindestens zwei Zapfen zur Sicherstellung der Orientierung des Verbindungselements gegenüber der Karosserie des Fahrzeugs. Der erste Zapfen befindet sich auf der linken Seite des Körpers des Verbindungselements und der zweite Zapfen auf der rechten Seite des Körpers des Verbindungselements. Alle Zapfen sind vorzugsweise identisch. Jeder Zapfen ist vorzugsweise rechtwinklig zum Körper des Verbindungselements ausgerichtet.

Der Zapfen kann zylindrisch geformt sein. Die Achse des Zapfens kann parallel zur Achse der Durchgangsöffnung des Körpers des Verbindungselements verlaufen. Die Achse des Zapfens kann sich jedoch um einige Grad von der Achse der Durchgangsöffnung abweichen, beispielsweise um 5° oder 7° usw. Der Zapfen ist mindestens 5 Millimeter groß, vorzugsweise ist der Zapfen mindestens mehrere Zentimeter groß. Der Zapfen kann beispielsweise 2 cm lang sein. Der Zapfen kann jedoch auch die Form einer Pyramide mit quadratischer Grundfläche usw. haben. Der Zapfen weist vorzugsweise keine scharfe Spitze auf, die Spitze des Zapfens ist vorzugsweise abgerundet, um Verletzungen des Benutzers bei der Handhabung des Verbindungselements zu vermeiden.

Der Zapfen kann aus demselben Material wie der Körper des Verbindungselements hergestellt sein. Der Zapfen kann jedoch auch aus einem anderen Material als der Körper des Verbindungselements bestehen. Der Zapfen ist vorzugsweise ein unlösbarer Bestandteil des Körpers des Verbindungselements. Der Zapfen kann zusammen mit dem Körper aus einem Stück Material, beispielsweise aus Kunststoff, hergestellt sein. Der Zapfen kann jedoch auch am Körper angeklebt oder angeschweißt usw. sein.

Das Verbindungselement kann auch mehr als zwei Zapfen enthalten. Der Körper des Verbindungselements kann vier Zapfen oder sechs Zapfen usw. aufweisen. Vorteilhafterweise umfasst der Körper des Verbindungselements eine gerade Anzahl von Zapfen, wobei die eine Hälfte der Zapfen auf der linken Seite des Körpers und die andere Hälfte der Zapfen auf der rechten Seite des Körpers angeordnet ist, sofern das Verbindungselement bezüglich einer vertikalen Längsebene symmetrisch ist.

Ein Vorteil der Zapfen zur Sicherstellung der Orientierung des Verbindungselements gegenüber der Karosserie kann darin bestehen, dass das Verbindungselement an die Karosserie angelegt wird, wobei der entsprechende Zapfen in die Öffnung zum Einführen des Zapfens in der Karosserie eingeführt wird. Durch das Einführen des Zapfens in die entsprechende Öffnung in der Karosserie kann eine Bewegung des Verbindungselements relativ zur Karosserie verhindert werden; das Verbindungselement kann sich lediglich (drehen) um die Achse des Zapfens bewegen. Der Zapfen erleichtert dem Monteur die Befestigung des Verbindungselements an der Karosserie: Das Verbindungselement wird dank des Zapfens in eine annähernde Position für die Befestigung an der Karosserie gebracht, und mittels einer Schraube wird das Verbindungselement in der Endposition an der Karosserie befestigt.

Der Körper des Verbindungselements kann aus Kunststoff bestehen und die Einsatzbuchse mit Öffnung kann aus Metall gefertigt sein. Ein derartiges Verbindungselement kann so hergestellt werden, dass die Metallbuchse in eine Form eingelegt und anschließend Kunststoff in die Form eingespritzt wird, der die Buchse aus den gewünschten Richtungen umhüllt. Die Buchse kann im Kunststoffkörper des Verbindungselements vergossen sein.

Ein Vorteil der Verwendung einer Metallbuchse und eines Kunststoffkörpers des Verbindungselements kann darin liegen, dass der Kunststoffkörper zäh ist. Der Kunststoffkörper kann sich elastisch verformen und kehrt nach Entfernung der einwirkenden Kraft in seine ursprüngliche Form zurück. Ein Vorteil der Metallbuchse kann die mechanische Widerstandsfähigkeit sein. Die Metallbuchse kann mechanischer Beanspruchung ohne wesentliche Form- und Größenänderung standhalten.

Jeder Senkboden für den Schraubenkopf kann einen Boden zum Kontakt mit dem Schraubenkopf aufweisen. Die Ebene des Bodens der Vertiefung zum Versenken des Schraubenkopfes auf der linken Seite des Körpers des Verbindungselements bildet mit der Ebene des Bodens der Vertiefung zum Versenken des Schraubenkopfes auf der rechten Seite des Körpers des Verbindungselements einen Winkel von mindestens 10°. Der Winkel zwischen der linken und der rechten Bodeneebene kann größer als 10° sein, beispielsweise 15° oder 20° usw. Vorteilhafterweise ist dieser Winkel nicht größer als 60°. Der Boden der Vertiefung zum Versenken des Schraubenkopfes ist somit vorzugsweise nicht parallel zur Symmetrieebene (z. B. zur vertikalen Längsebene). Die Ebene des Bodens der Vertiefung zum Versenken des Schraubenkopfes ist vorzugsweise um mindestens 5° von der Symmetrieebene abgewinkelt.

Beim Durchführen der Schraube durch die Durchgangsöffnung des Körpers des Verbindungselements steht der Kopf dieser Schraube vorzugsweise mit dem Boden der Vertiefung zum Versenken des Schraubenkopfes in Kontakt. Die Achse dieser Schraube kann um mindestens 5° von der Achse der Durchgangsöffnung des Körpers des Verbindungselements abweichen.

Der Winkel der Abweichung der Achse der Schraube, die durch die Durchgangsöffnung zum Durchführen der Schraube geführt ist, von der Achse der Öffnung zum Durchführen der Schraube entspricht vorzugsweise der Hälfte des Winkels, den die Ebene des Bodens der Vertiefung zum Versenken des Schraubenkopfes auf der linken Seite des Verbindungselements mit der Ebene des Bodens der Vertiefung zum Versenken des Schraubenkopfes auf der rechten Seite des Verbindungselements einschließt. Der Winkel der Abweichung der Schraubenachse von der Achse der Durchgangsöffnung entspricht vorzugsweise dem Winkel, den die Ebene des Bodens der Vertiefung auf der linken (bzw. rechten) Seite des Verbindungselements mit der Symmetrieebene des Verbindungselements bildet.

Ein Vorteil dieser Neigung des Bodens der Vertiefung zum Versenken des Schraubenkopfes kann darin bestehen, dass bei der Befestigung an einem schrägen Karosserieteil die Öffnung mit Gewinde der Einsatzbuchse für die einfache Befestigung des Scheinwerfers vorteilhaft ausgerichtet ist. Als vorteilhafte Ausrichtung für die Befestigung des Scheinwerfers kann beispielsweise gelten, dass die Achse der Öffnung mit Gewinde der Einsatzbuchse parallel zur Längsachse des Fahrzeugs verläuft usw. Durch die Neigung des Bodens der Vertiefung zum Versenken des Schraubenkopfes können unterschiedliche Karosserieneigungen kompensiert werden, um eine einfache Befestigung des Scheinwerfers an der Karosserie zu gewährleisten.

Die beschriebenen Mängel der bekannten Lösungen werden ferner durch ein Kraftfahrzeug gemäß der Erfindung zumindest teilweise behoben. Das Kraftfahrzeug umfasst eine Karosserie, mindestens zwei Scheinwerfer, mindestens zwei Schrauben zur Befestigung der Scheinwerfer, mindestens zwei Schrauben zur Befestigung der Verbindungselemente und mindestens zwei formgleiche Verbindungselemente zur Befestigung eines Bauteils an der Karosserie des Kraftfahrzeugs, wie oben beschrieben. Die Karosserie enthält mindestens zwei Aussparungen zur Aufnahme der Scheinwerfer. Eine Aussparung befindet sich auf der linken Seite der Karosserie und die andere Aussparung zur Aufnahme eines Scheinwerfers auf der rechten Seite. Das erste Verbindungselement ist mit der ersten Schraube zur Befestigung des Verbindungselements an der linken Aussparung der Karosserie befestigt und das zweite Verbindungselement mit der zweiten Schraube an der rechten Aussparung. Die Öffnung mit Gewinde der Einsatzbuchse jedes Verbindungselements zeigt nach außen aus der jeweiligen Aussparung der Karosserie. Der erste Scheinwerfer ist in der linken Aussparung der Karosserie angeordnet und mit der ersten Schraube zur Befestigung des Scheinwerfers an der Einsatzbuchse mit Öffnung des ersten Verbindungselements befestigt. Der zweite Scheinwerfer ist in der rechten Aussparung angeordnet und mit der zweiten Schraube zur Befestigung des Scheinwerfers an der Einsatzbuchse mit Öffnung des zweiten Verbindungselements befestigt.

Beim Kraftfahrzeug kann es sich um einen Sedan, einen Hatchback usw. handeln. Das Verbindungselement ist vorzugsweise an verschiedene Karosserieformen eines Fahrzeugs befestigbar. Das Verbindungselement vereinheitlicht vorzugsweise die Position der Öffnung zur Befestigung des Scheinwerfers (d. h. der Öffnung mit Innengewinde der Einsatzbuchse des Verbindungselements), sodass ein Scheinwerfertyp an unterschiedlichen Karosserietypen befestigt werden kann, ohne dass zusätzliche (irreversible, wie z. B. Schleifen oder Schneiden usw.) Anpassungen an Karosserie oder Scheinwerfer erforderlich sind.

Die Karosserie kann der tragende Teil des Fahrzeugs sein. Die Karosserie kann die äußere Form des Fahrzeugs (Automobils) bestimmen. Die Karosserie kann die Form der Innenräume des Fahrzeugs bestimmen. Zu den Innenräumen können der Fahrgastraum, der Laderaum und/oder der Motorraum usw. gehören. Die Karosserie besteht vorzugsweise aus Metall.

Die Karosserie enthält mindestens zwei Aussparungen für Scheinwerfer. Die Karosserie kann zwei Aussparungen für Scheinwerfer im vorderen Bereich des Fahrzeugs aufweisen, also Aussparungen für die vorderen Scheinwerfer. Die Karosserie kann zwei Aussparungen im hinteren Bereich der Karosserie aufweisen, also Aussparungen für die hinteren Scheinwerfer. Die Karosserie kann mehr als zwei Aussparungen enthalten, sie kann vier Aussparungen oder auch mehr als vier Aussparungen enthalten. Vorteilhafterweise enthält die Karosserie eine gerade Anzahl von Aussparungen für Scheinwerfer, wobei die Hälfte der Aussparungen für Scheinwerfer auf der linken Seite der Karosserie des Fahrzeugs und die andere Hälfte auf der rechten Seite der Karosserie des Fahrzeugs angeordnet ist.

Jede Aussparung zur Aufnahme des Scheinwerfers hat vorzugsweise eine komplementäre Form zum Scheinwerfer, der in die jeweilige Aussparung eingesetzt werden soll. Die Karosserie, die jede Aussparung begrenzt, enthält vorzugsweise mindestens eine Öffnung zur Verschraubung des Verbindungselements. Die Öffnung zur Verschraubung des Verbindungselements kann ein Gewinde aufweisen. Die Öffnung zur Verschraubung des Verbindungselements befindet sich vorzugsweise an der Seitenwand der Karosserie, die die Aussparung zur Befestigung des Scheinwerfers begrenzt.

Die Aussparung zur Befestigung des Scheinwerfers ist vorzugsweise nach hinten offen. Die Aussparung zur Befestigung des Scheinwerfers kann auch zu weiteren Seiten offen sein. Die Aussparung zur Befestigung des Scheinwerfers kann nach oben offen sein. Die Aussparung zur Befestigung des Scheinwerfers kann zur äußeren Seitenwand hin offen sein. Bei der Aussparung auf der linken Seite der Karosserie kann die äußere Seitenwand die linke Seite sein, bei der Aussparung auf der rechten Seite der Karosserie kann es die rechte Seite sein.

Jede Aussparung zur Befestigung des Scheinwerfers ist vorzugsweise durch die Karosserie an der Unterseite und an der inneren Seitenwand begrenzt. Die innere Seitenwand kann bei der Aussparung auf der linken Seite der Karosserie die rechte Seite sein und bei der Aussparung auf der rechten Seite der Karosserie die linke Seite usw. Die Aussparung zur Befestigung des Scheinwerfers, die sich im vorderen Bereich des Fahrzeugs befindet, kann durch die Karosserie an der Rückseite begrenzt sein. Die Aussparung zur Befestigung des Scheinwerfers, die sich im hinteren Bereich des Fahrzeugs befindet, kann durch die Karosserie an der Vorderseite begrenzt sein.

Die Aussparung der Karosserie kann eine regelmäßige Form aufweisen, beispielsweise kann sie eine komplementäre Form haben.

Die Schrauben zur Befestigung des Scheinwerfers am Verbindungselement und die Schrauben zur Befestigung des Verbindungselements an der Karosserie können in Form und Abmessungen identisch sein. Diese Schrauben können jedoch auch in Form und Abmessungen unterschiedlich sein. Jede Schraube (also sowohl die Schraube zur Befestigung des Scheinwerfers am Verbindungselement als auch die Schraube zur Befestigung des Verbindungselements an der Karosserie) besteht aus einem Kopf und einem Schaft mit Gewinde. Der Kopf jeder Schraube kann einen Schlitz für einen Kreuzschlitzschraubendreher (also einen Schraubendreher mit Kreuzspitze), einen Schlitz für einen Flachschlitzschraubendreher usw. aufweisen.

Das Kraftfahrzeug kann mehr als zwei Schrauben zur Befestigung des Verbindungselements an der Karosserie enthalten. Die Anzahl der Schrauben zur Befestigung des Verbindungselements an der Karosserie kann mit der Gesamtanzahl der Verbindungselemente und der Anzahl der Durchgangsöffnungen der einzelnen Verbindungselemente übereinstimmen. Wenn das Kraftfahrzeug beispielsweise zwei Verbindungselemente enthält und jedes Verbindungselement zwei Durchgangsöffnungen für das Einführen einer Schraube aufweist, kann das Kraftfahrzeug insgesamt vier Schrauben zur Befestigung des Verbindungselements an der Karosserie enthalten usw.

Das Kraftfahrzeug kann mehr als zwei Schrauben zur Befestigung des Scheinwerfers am Verbindungselement enthalten. Die Anzahl der Schrauben zur Befestigung der Scheinwerfer an den Verbindungselementen kann mit der Anzahl der Verbindungselemente übereinstimmen. Wenn das Kraftfahrzeug beispielsweise vier Verbindungselemente enthält, kann das Kraftfahrzeug vier Schrauben zur Befestigung des Scheinwerfers am Verbindungselement enthalten. Jede Schraube zur Befestigung des Scheinwerfers am Verbindungselement wird vorzugsweise in die Öffnung mit Gewinde der Einsatzbuchse des jeweiligen Verbindungselements eingeschraubt.

Das Kraftfahrzeug enthält mindestens zwei Verbindungselemente, wie oben beschrieben. Das Kraftfahrzeug kann auch mehr als zwei Verbindungselemente enthalten, es kann vier Verbindungselemente, sechs Verbindungselemente usw. enthalten. Vorteilhafterweise enthält das Kraftfahrzeug eine gerade Anzahl von Verbindungselementen, wobei die eine Hälfte in der Aussparung zur Befestigung des Scheinwerfers auf der linken Seite der Karosserie und die andere Hälfte in der Aussparung auf der rechten Seite der Karosserie befestigt ist usw. Wenn die Karosserie vier Aussparungen zur Befestigung der Scheinwerfer enthält, können die Verbindungselemente gleichmäßig auf die einzelnen Aussparungen verteilt werden, d. h. die erste Aussparung kann die gleiche Anzahl von Verbindungselementen enthalten wie die zweite Aussparung, die zweite Aussparung kann die gleiche Anzahl von Verbindungselementen enthalten wie die dritte Aussparung und die dritte Aussparung kann die gleiche Anzahl von Verbindungselementen enthalten wie die vierte Aussparung usw.

In jeder Aussparung kann mehr als ein Verbindungselement befestigt sein. In der Aussparung zur Befestigung des Scheinwerfers können zwei Verbindungselemente oder drei Verbindungselemente usw. befestigt sein. Die Anzahl der in den einzelnen Aussparungen der Karosserie zur Befestigung des Scheinwerfers befestigten Verbindungselemente kann je nach Scheinwerfertyp, nach der Kraft, mit der der Scheinwerfer an der Karosserie befestigt werden soll, usw. gewählt werden.

Dank der ebenensymmetrischen Verbindungselemente können die gleichen Verbindungselemente sowohl in den Aussparungen zur Befestigung der Scheinwerfer auf der linken Seite der Karosserie als auch in den Aussparungen zur Befestigung der Scheinwerfer auf der rechten Seite verwendet werden. Es ist nicht erforderlich, Verbindungselemente herzustellen, die nur für die Aussparung auf der linken Seite bestimmt sind, und Verbindungselemente, die nur für die Aussparung auf der rechten Seite bestimmt sind. Bei der Montage des Fahrzeugs kann die Arbeit des Monteurs erleichtert werden, da dieser nicht darauf achten muss, ob er das Verbindungselement für die entsprechende Seite der Karosserie vorbereitet hat. Der Monteur montiert die entsprechenden Verbindungselemente in die entsprechenden Aussparungen der Karosserie, wobei alle Verbindungselemente in alle Aussparungen der Karosserie passen. Bei der Montage ist es dem Monteur egal, welches Verbindungselement er ergreift und an der Karosserie zu montieren beginnt, jedes Verbindungselement passt an die Karosserie in der richtigen Richtung und Ausrichtung zur Befestigung des Scheinwerfers.

Der Scheinwerfer ist vorzugsweise ein Lichtmodul, das verschiedene Teile enthält. Der Scheinwerfer kann ein Außengehäuse und mindestens ein Licht enthalten. Der Scheinwerfer kann mehr als ein Licht enthalten, der Scheinwerfer kann zwei Lichter oder auch mehr als zwei Lichter enthalten. Das Licht kann ein Teil des Scheinwerfers für die Abstrahlung von Richtungslicht und/oder Bremslicht und/oder Nebellicht usw. sein. Das Außengehäuse des Scheinwerfers enthält vorzugsweise mindestens eine Öffnung zum Durchführen einer Schraube zur Befestigung des Scheinwerfers am Verbindungselement. Der Scheinwerfer kann auch mehr als eine Öffnung zum Durchführen einer Schraube zur Befestigung des Scheinwerfers an der Karosserie des Fahrzeugs enthalten. Der Scheinwerfer kann zwei Öffnungen zum Durchführen von Schrauben zur Befestigung des Scheinwerfers am Verbindungselement, drei Öffnungen zum Durchführen von Schrauben zur Befestigung des Scheinwerfers am Verbindungselement oder auch mehr als drei Öffnungen zum Durchführen einer Schraube zur Befestigung des Scheinwerfers am Verbindungselement enthalten.

Jede Schraube zur Befestigung des Scheinwerfers am Verbindungselement wird vorzugsweise nur durch eine Öffnung zum Durchführen der Schraube zur Befestigung des Verbindungselements des Scheinwerfers geführt. Wenn der Scheinwerfer zwei Öffnungen zum Durchführen der Schraube zur Befestigung des Scheinwerfers am Verbindungselement enthält, ist dieser Scheinwerfer vorzugsweise mit zwei Verbindungselementen mittels zweier Schrauben zur Befestigung der Scheinwerfer an den Verbindungselementen befestigt.

Der Scheinwerfer kann ein Frontscheinwerfer sein. Vorteilhafterweise ist der Scheinwerfer ein Rückscheinwerfer. Der Scheinwerfer für die Aussparung auf der linken Seite der Karosserie ist vorzugsweise spiegelbildlich identisch mit dem Scheinwerfer für die Aussparung auf der rechten Seite der Karosserie. Das Fahrzeug kann somit einen linken und einen rechten Scheinwerfer enthalten, wobei der linke Scheinwerfer ein Spiegelbild des rechten Scheinwerfers ist.

Die Karosserie (oder ihr Teil), die die Aussparung zur Befestigung des Scheinwerfers begrenzt, kann eine Öffnung zur Verschraubung des Scheinwerfers enthalten. Der Scheinwerfer kann am Verbindungselement und gleichzeitig an der Öffnung zur Verschraubung des Scheinwerfers in der Karosserie befestigt werden. Diese Öffnung kann die Befestigungskraft des Scheinwerfers an der Karosserie erhöhen.

Ein Vorteil eines Fahrzeugs, das mindestens zwei formgleiche Verbindungselemente enthält, kann darin bestehen, dass die Montage des Scheinwerfers an der Karosserie (bzw. am Verbindungselement) einfach ist. Der Monteur muss nicht darauf achten, welches Verbindungselement er zur Montage an der Karosserie vorbereitet hat, da alle Verbindungselemente in Form und Abmessungen identisch sind und somit alle Verbindungselemente gleich in die jeweiligen Aussparungen der Karosserie eingesetzt werden können.

Ein weiterer Vorteil eines Fahrzeugs mit mindestens zwei Verbindungselementen kann darin bestehen, dass bei Verwendung der Verbindungselemente der Scheinwerfer an verschiedenen Karosserien von Fahrzeugen befestigt werden kann. Mit Hilfe des Verbindungselements können die Formen der Aussparungen verschiedener Karosserien vereinheitlicht werden. Beispielsweise kann die Karosserie eines Hatchbacks eine andere Form der Aussparung zur Befestigung des Scheinwerfers aufweisen als die Karosserie eines Sedans. Mit Hilfe des Verbindungselements (der Verbindungselemente) kann die Position der Öffnung mit Gewinde vereinheitlicht werden (die Einsatzbuchse mit Öffnung und Gewinde kann beispielsweise in gleichem Abstand von der Karosserie, die die Unterseite der Aussparung begrenzt, angeordnet sein usw.), an der der Scheinwerfer befestigt werden kann. Dank des Verbindungselements kann also derselbe (Rück-)Scheinwerfer sowohl für ein Fahrzeug des Typs Sedan als auch für ein Fahrzeug des Typs Hatchback verwendet werden usw.

Die linke Aussparung der Karosserie enthält vorzugsweise mindestens eine Öffnung zum Einführen des Zapfens des ersten Verbindungselements, und die rechte Aussparung der Karosserie enthält mindestens eine Öffnung zum Einführen des Zapfens des zweiten Verbindungselements. Der Zapfen des ersten Verbindungselements wird vorzugsweise in die Öffnung zum Einführen des Zapfens des Verbindungselements der linken Aussparung der Karosserie eingeführt, und der Zapfen des zweiten Verbindungselements wird vorzugsweise in die Öffnung zum Einführen des Zapfens des Verbindungselements der rechten Aussparung der Karosserie eingeführt. Falls das Verbindungselement keinen Zapfen enthält, können alle Öffnungen zum Einführen des Zapfens leer bleiben.

Die linke Aussparung der Karosserie kann die Aussparung auf der linken Seite der Karosserie und die rechte Aussparung der Karosserie die Aussparung auf der rechten Seite der Karosserie sein.

Die Öffnung zum Einführen des Zapfens des Verbindungselements befindet sich vorzugsweise neben der Öffnung, in die die Schraube zur Befestigung des Verbindungselements an der Karosserie eingeschraubt wird. Die Öffnung zum Einführen des Zapfens ist vorzugsweise rund. Die Öffnung zum Einführen des Zapfens kann jedoch auch eine komplementäre Form zur Form des Zapfens haben, d. h. wenn der Zapfen des Verbindungselements in Richtung seiner Achse betrachtet eine quadratische Form hat, kann die Öffnung zum Einführen des Zapfens quadratisch sein usw.

Die Verwendung des Zapfens kann bei der Montage des Fahrzeugs bzw. bei der Montage des Verbindungselements an der Karosserie vorteilhaft sein. Das Verbindungselement kann an die Karosserie, an der es befestigt werden soll, angelegt werden. Der Zapfen dieses Verbindungselements kann in die Öffnung zum Einführen des Zapfens des Verbindungselements eingeführt werden. Durch das Einführen des Zapfens in diese Öffnung kann die Position des Verbindungselements relativ zur Karosserie sichergestellt werden. Der Monteur kann das Verbindungselement um die Achse des in die Öffnung zum Einführen des Zapfens eingeführten Zapfens drehen, wodurch das Verbindungselement in die Position zur Verschraubung des Verbindungselements an der Karosserie gebracht werden kann.

Ein Vorteil des Zapfens des Verbindungselements und der Öffnung zum Einführen des Zapfens in der Karosserie kann die Erleichterung der Montage des Verbindungselements an der Karosserie sein. Dank des Zapfens muss der Monteur, der die Montage durchführt, die Position des Verbindungselements relativ zur Karosserie nicht kompliziert einstellen und korrigieren, sondern führt einfach den Zapfen des Verbindungselements in die Öffnung zum Einführen des Zapfens an der Karosserie ein, wodurch die Position des Verbindungselements relativ zur Karosserie sichergestellt wird, und der Monteur kann das Verbindungselement einfach mit der Schraube zur Befestigung des Verbindungselements an der Karosserie befestigen.

Die Orientierung des zweiten Verbindungselements, das in der rechten Aussparung für den Scheinwerfer befestigt ist, ist spiegelbildlich zur Orientierung des ersten Verbindungselements, das in der linken Aussparung für den Scheinwerfer befestigt ist.

Alle Verbindungselemente sind formgleich. Jedes Verbindungselement ist ebenensymmetrisch. Dank der Formgleichheit und Ebenensymmetrie können die an der Karosserie befestigten Verbindungselemente leicht spiegelbildlich zueinander ausgerichtet werden.

Die spiegelbildliche Ausrichtung der Verbindungselemente ist besonders vorteilhaft, wenn der Scheinwerfer, der in der Aussparung auf der linken Seite der Karosserie befestigt ist, spiegelbildlich mit dem Scheinwerfer identisch ist, der in der Aussparung auf der rechten Seite der Karosserie befestigt ist.

Falls in der Aussparung auf der linken Seite der Karosserie mehr Verbindungselemente befestigt sind (beispielsweise zwei Verbindungselemente usw.), kann in der Aussparung auf der rechten Seite der Karosserie die gleiche Anzahl von Verbindungselementen befestigt sein. Die an der linken Aussparung befestigten Verbindungselemente sind vorzugsweise spiegelbildlich zu den an der rechten Aussparung befestigten Verbindungselementen ausgerichtet.

Der Kopf der Schraube zur Befestigung des Verbindungselements an der Karosserie steht vorzugsweise mit dem Boden der Vertiefung zum Versenken des Schraubenkopfes in Kontakt. Die Achse des Schraubenschafts weicht bei einer Betrachtung senkrecht zur Achse des Schraubenschafts und zur Achse der Durchgangsöffnung des Körpers des Verbindungselements von der Achse der Öffnung des Körpers des Verbindungselements um mindestens 5° ab. Die Achse des Schafts der Schraube zur Befestigung des Verbindungselements an der Karosserie kann um 10° oder 15° usw. von der Achse der Durchgangsöffnung des Körpers des Verbindungselements abweichen. Vorteilhafterweise weicht die Achse des Schraubenschafts um nicht mehr als 30° von der Achse der Durchgangsöffnung des Körpers des Verbindungselements ab.

Die Achse der Schraube zur Befestigung des Verbindungselements an der Karosserie steht vorzugsweise senkrecht zur Ebene der Karosserie (an der jeweiligen Befestigungsstelle).

Die Ebene des Bodens der linken Vertiefung zum Versenken des Schraubenkopfes kann mit der Ebene des Bodens der rechten Vertiefung zum Versenken des Schraubenkopfes einen Winkel von mindestens 20° einschließen.

Auch das Verfahren zur Montage von Scheinwerfern an der Karosserie eines Kraftfahrzeugs unter Verwendung von mindestens zwei formgleichen Verbindungselementen, wie oben beschrieben, beseitigt die Mängel der aus dem Stand der Technik bekannten Lösungen zumindest teilweise. Das Verfahren zur Montage von Scheinwerfern an der Karosserie eines Kraftfahrzeugs unter Verwendung von mindestens zwei formgleichen Verbindungselementen umfasst den Schritt der Befestigung von zwei formgleichen Verbindungselementen an der Karosserie des Kraftfahrzeugs und den Schritt der Befestigung der Scheinwerfer in den Aussparungen der Karosserie des Kraftfahrzeugs.

Im Schritt der Befestigung von zwei formgleichen Verbindungselementen an der Karosserie wird das erste Verbindungselement durch die Durchgangsöffnung im Körper des Verbindungselements an der die linke Aussparung begrenzenden Karosserie angeschraubt und das zweite Verbindungselement durch die Durchgangsöffnung des Körpers des Verbindungselements an der die rechte Aussparung begrenzenden Karosserie angeschraubt.

Im Schritt der Befestigung von zwei formgleichen Verbindungselementen an der Karosserie wird das zweite Verbindungselement spiegelbildlich zum ersten Verbindungselement ausgerichtet.

Im Schritt der Befestigung der Scheinwerfer in den Aussparungen der Karosserie des Kraftfahrzeugs wird der erste Scheinwerfer in die linke Aussparung der Karosserie eingesetzt und an der Öffnung mit Gewinde der Einsatzbuchse des ersten Verbindungselements angeschraubt.

Im Schritt der Befestigung der Scheinwerfer in den Aussparungen der Karosserie des Kraftfahrzeugs wird der zweite Scheinwerfer in die rechte Aussparung der Karosserie eingesetzt und an der Öffnung mit Gewinde der Einsatzbuchse des zweiten Verbindungselements angeschraubt.

Bei diesem Verfahren zur Montage von Scheinwerfern an der Karosserie eines Kraftfahrzeugs unter Verwendung von mindestens zwei formgleichen Verbindungselementen erfolgt der Schritt der Befestigung der zwei formgleichen Verbindungselemente an der Karosserie vorzugsweise vor dem Schritt der Befestigung der Scheinwerfer in den Aussparungen der Karosserie des Kraftfahrzeugs.

Wenn das Verbindungselement mehr als eine Durchgangsöffnung im Körper des Verbindungselements aufweist, kann dieses Verbindungselement im Schritt der Befestigung von zwei formgleichen Verbindungselementen an der Karosserie mit der entsprechenden Anzahl von Schrauben an der Karosserie befestigt werden, d. h. wenn das Verbindungselement beispielsweise zwei Durchgangsöffnungen im Körper des Verbindungselements aufweist, kann dieses Verbindungselement mit zwei Schrauben zur Befestigung des Verbindungselements an der Karosserie des Kraftfahrzeugs befestigt werden usw.

Im Schritt der Befestigung von zwei formgleichen Verbindungselementen an der Karosserie kann zunächst das erste Verbindungselement an der Karosserie befestigt werden und danach das zweite Verbindungselement. Im Schritt der Befestigung von zwei formgleichen Verbindungselementen an der Karosserie können jedoch auch beide Verbindungselemente gleichzeitig an der Karosserie befestigt werden.

Wenn an der die Aussparung für den Scheinwerfer begrenzenden Karosserie mindestens zwei Verbindungselemente befestigt sind, kann im Schritt der Befestigung der Scheinwerfer in den Aussparungen der Karosserie des Kraftfahrzeugs der Scheinwerfer an allen Verbindungselementen befestigt werden, die an der die jeweilige Aussparung für den Scheinwerfer begrenzenden Karosserie befestigt sind.

Im Schritt der Befestigung der Scheinwerfer in den Aussparungen der Karosserie des Kraftfahrzeugs kann zunächst der erste Scheinwerfer an der Karosserie befestigt werden und danach der zweite Scheinwerfer. Im Schritt der Befestigung der Scheinwerfer in den Aussparungen der Karosserie des Kraftfahrzeugs können jedoch auch beide Scheinwerfer gleichzeitig an den jeweiligen Teilen der Karosserie befestigt werden.

Ein Vorteil der Montage von Scheinwerfern an der Karosserie eines Kraftfahrzeugs unter Verwendung von mindestens zwei formgleichen Verbindungselementen kann die Einfachheit einer solchen Montage sein. Die Verbindungselemente werden einfach an der Karosserie des Kraftfahrzeugs angeschraubt. Der Scheinwerfer wird anschließend einfach am Verbindungselement angeschraubt. Eine weitere Vereinfachung der Montage besteht darin, dass alle Verbindungselemente gleich und ebenensymmetrisch sind, sodass jedes Verbindungselement sowohl für die Aussparung auf der linken Seite der Karosserie als auch für die Aussparung auf der rechten Seite der Karosserie verwendet werden kann.

Im Schritt der Befestigung der Verbindungselemente an der Karosserie wird vorzugsweise der Zapfen zur Sicherstellung der Orientierung des Verbindungselements gegenüber der Karosserie des Kraftfahrzeugs des ersten Verbindungselements in die Öffnung zum Einführen des Zapfens des Verbindungselements der linken Aussparung der Karosserie eingeführt. In die Öffnung zum Einführen des Zapfens des Verbindungselements der rechten Aussparung der Karosserie wird vorzugsweise der Zapfen zur Sicherstellung der Orientierung des Verbindungselements gegenüber der Karosserie des Kraftfahrzeugs des zweiten Verbindungselements eingeführt.

Der Zapfen des Verbindungselements wird vorzugsweise vor dem Anschrauben des Verbindungselements an die Karosserie mit der Schraube zur Befestigung des Verbindungselements an der Karosserie in die Öffnung zum Einführen des Zapfens des Verbindungselements der Karosserie des Kraftfahrzeugs eingeführt.

Das Einführen des Zapfens des Verbindungselements in die Öffnung zum Einführen des Zapfens des Verbindungselements der Karosserie des Kraftfahrzeugs kann zur Vereinfachung der Montage der Scheinwerfer an der Karosserie des Kraftfahrzeugs vorteilhaft sein. Beim Einführen des Zapfens in die Öffnung zum Einführen des Zapfens kann die Position des Verbindungselements relativ zur Karosserie sichergestellt werden, wobei diese Position durch die Schrauben zur Befestigung des Verbindungselements an der Karosserie gesichert werden kann.

### Erläuterung der Zeichnungen

Das Wesen der Erfindung wird weiterhin anhand von Ausführungsbeispielen erläutert, die unter Verwendung der beigefügten Zeichnungen beschrieben sind, wobei in:
Abb. 1 das Verbindungselement ohne Schraube in der Seitenansicht schematisch dargestellt ist,
Abb. 2 das Verbindungselement ohne Schraube in der Vorderansicht schematisch dargestellt ist,
Abb. 3 der Schnitt A-A aus Abb. 1 schematisch dargestellt ist,
Abb. 4 der Schnitt B-B aus Abb. 1 schematisch dargestellt ist,
Abb. 5 die Vorderansicht des Verbindungselements schematisch dargestellt ist,
Abb. 6 die Seitenansicht des Verbindungselements schematisch dargestellt ist,
Abb. 7 das Verbindungselement ohne Schraube schematisch dargestellt ist,
Abb. 8 die Draufsicht auf das Verbindungselement schematisch dargestellt ist,
Abb. 9 die Aussparung für den Scheinwerfer in der Vorderansicht schematisch dargestellt ist,
Abb. 10 die Aussparung für den Scheinwerfer mit Verbindungselement in der Vorderansicht schematisch dargestellt ist,
Abb. 11 die Aussparung für den Scheinwerfer mit Verbindungselement in der Seitenansicht schematisch dargestellt ist,
Abb. 12 die Aussparung, der Scheinwerfer und das Verbindungselement in der Draufsicht schematisch dargestellt sind,
Abb. 13 der hintere Karosseriebereich mit Verbindungselementen in der Draufsicht schematisch dargestellt ist,
Abb. 14 die Heckklappe eines Fahrzeugs mit Verbindungselementen in der Rückansicht schematisch dargestellt ist,
Abb. 15 die Karosserie in der Rückansicht schematisch dargestellt ist,
Abb. 16 das Schema des Montageverfahrens des Scheinwerfers an der Karosserie schematisch dargestellt ist.

### Ausführungsbeispiele

Die Erfindung wird nachstehend anhand von Ausführungsbeispielen unter Bezugnahme auf die zugehörigen Zeichnungen näher erläutert.

### Erstes Ausführungsbeispiel

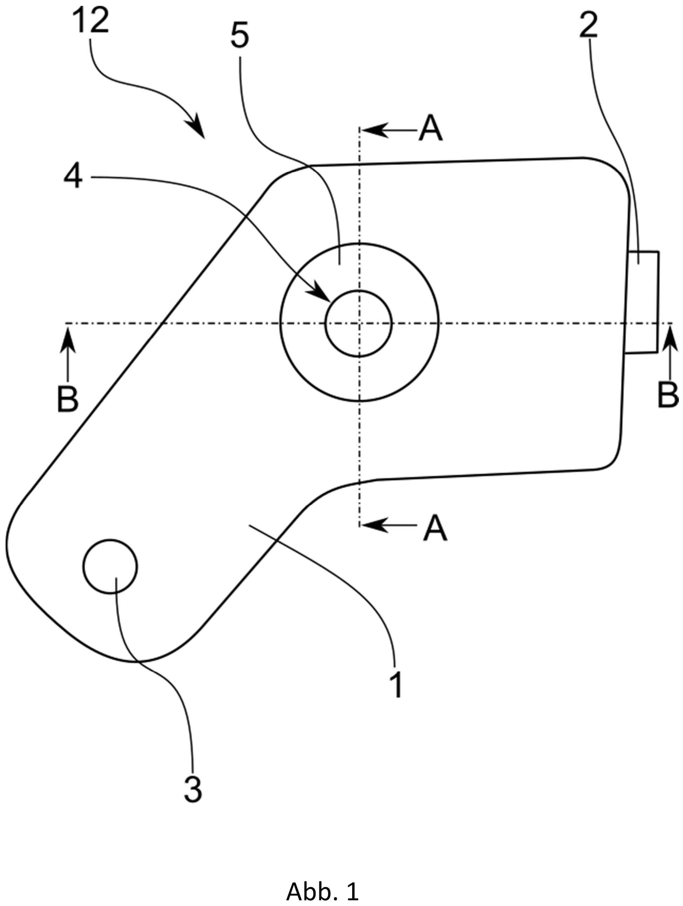

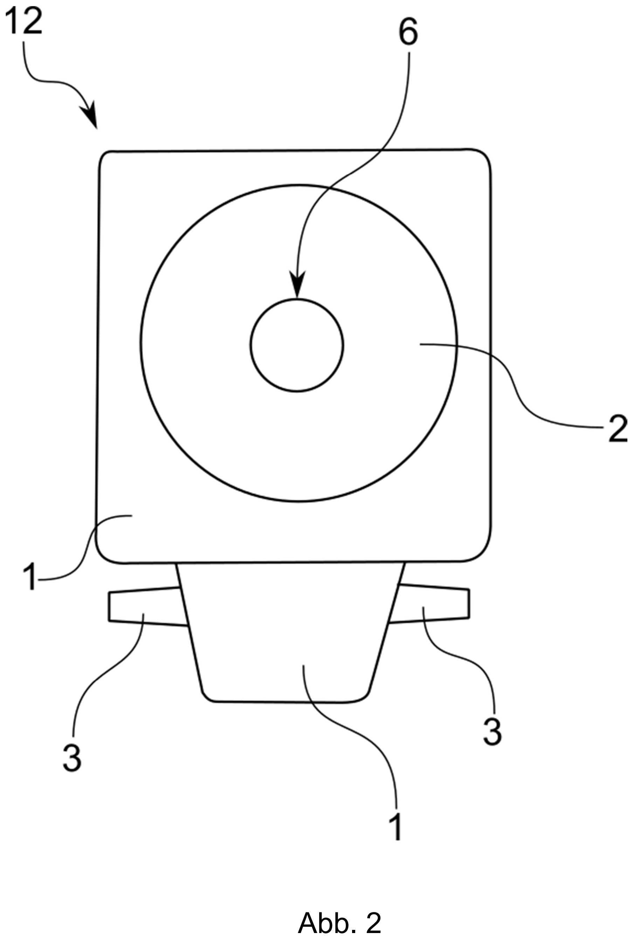

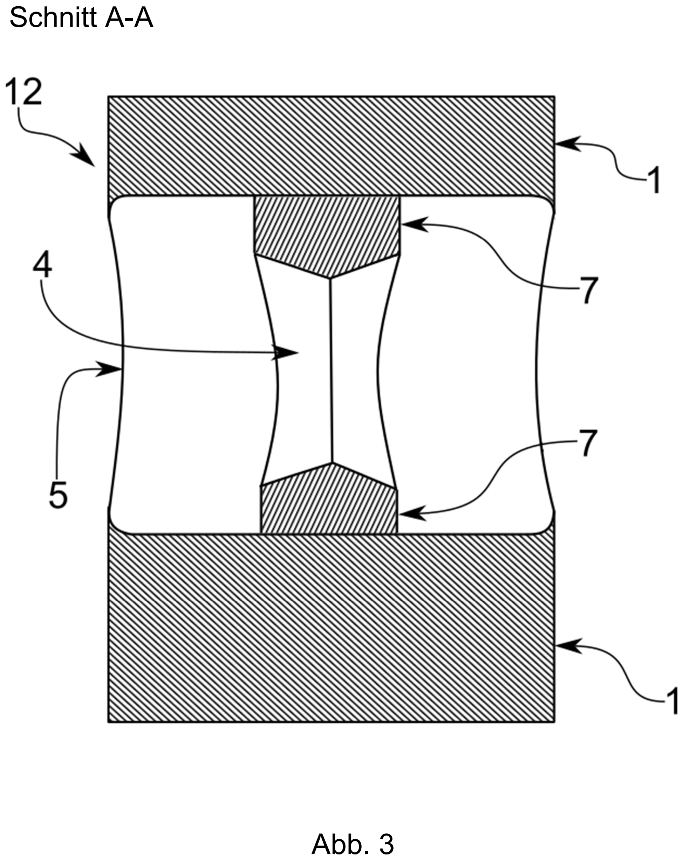

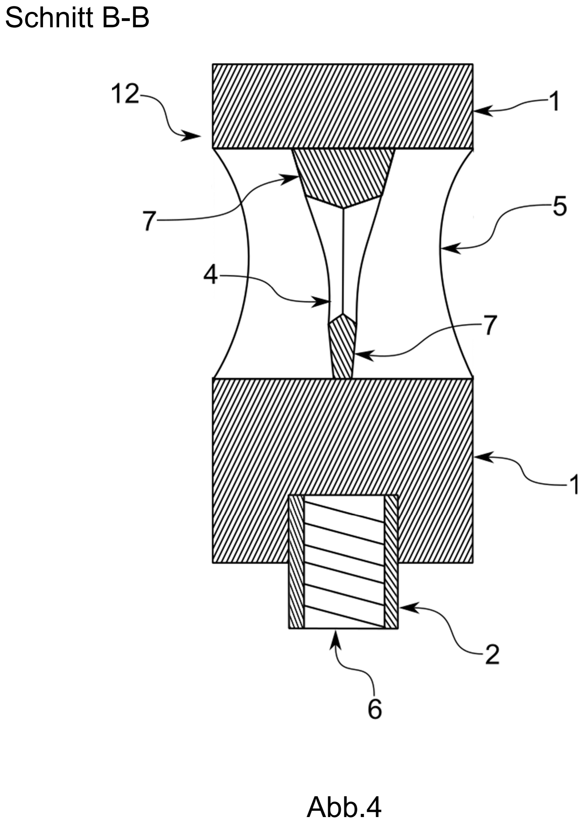

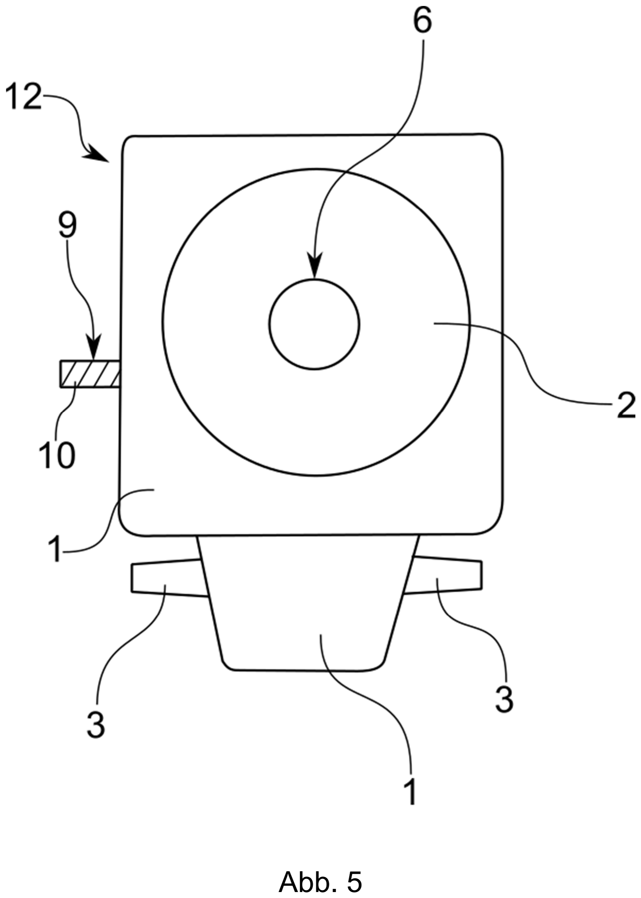

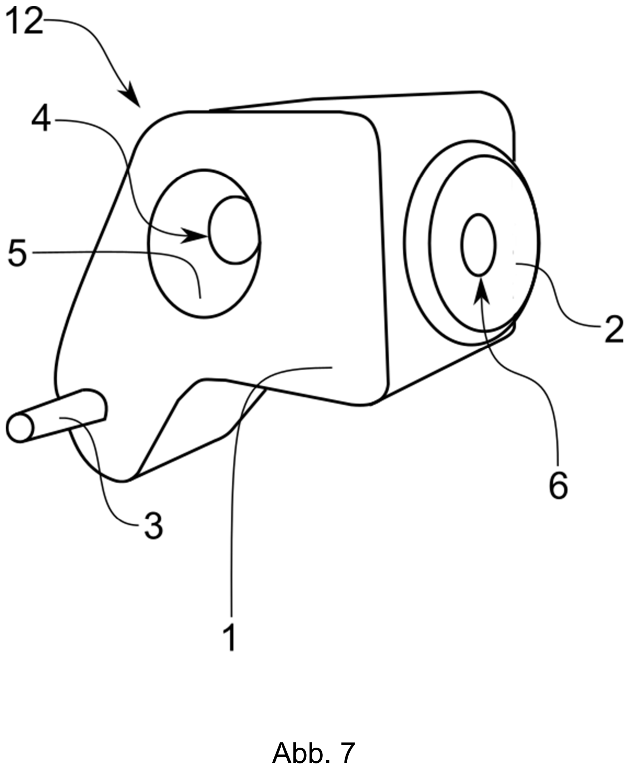

Im ersten Ausführungsbeispiel umfasst das Verbindungselement **12** zur Befestigung eines Bauteils an der Karosserie **14** eines Kraftfahrzeugs **13** einen Körper mit einer Durchgangsöffnung **4** zum Durchführen einer Schraube **9** und zwei Zapfen **3** zur Sicherstellung der Orientierung des Verbindungselements **12** gegenüber der Karosserie **14** des Kraftfahrzeugs **13** sowie eine Einsatzbuchse **2** mit einer Öffnung **6** mit Innengewinde zur Verschraubung eines Bauteils. Das Verbindungselement **12** ist in den **Abb. 1 bis 8** dargestellt.

In diesem Ausführungsbeispiel ist das Verbindungselement **12** ebenensymmetrisch zur vertikalen Längsebene; die linke Seite des Verbindungselements **12** ist somit in Form und Abmessungen mit der rechten Seite identisch.

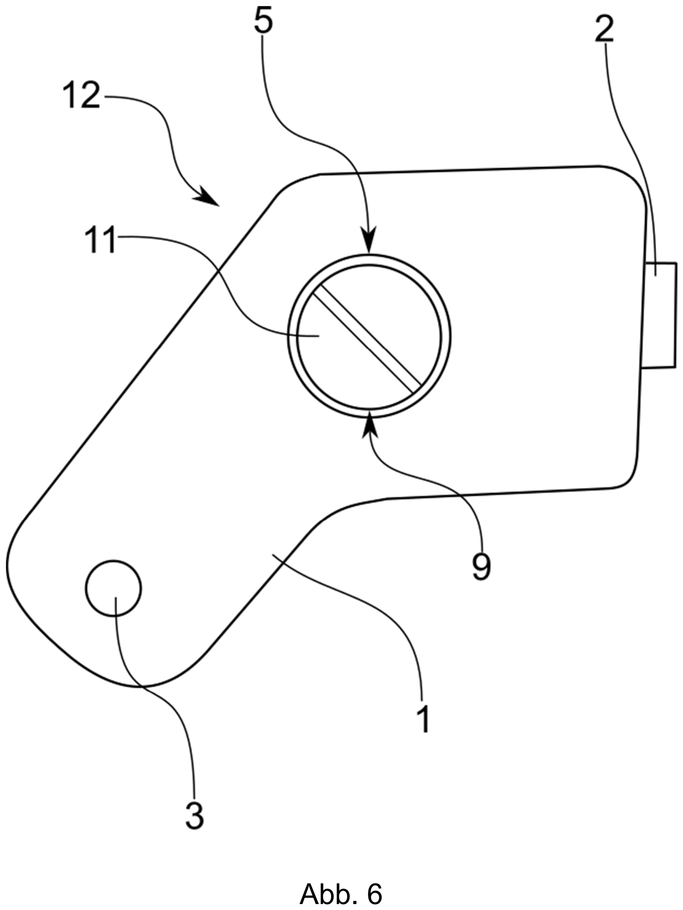

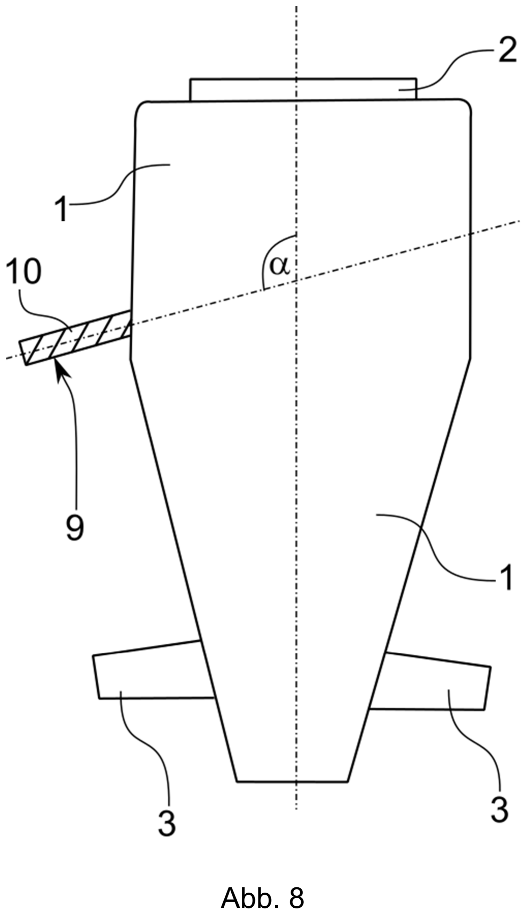

In der Seitenansicht hat der Körper **1** des Verbindungselements **12** die Form zweier miteinander verbundener Rechtecke. Die längere Seite des ersten Rechtecks ist horizontal ausgerichtet, die längere Seite des zweiten Rechtecks bildet mit der horizontalen Seite des ersten Rechtecks einen Winkel von **135°** (siehe **Abb. 1** und **Abb. 6**). In der Draufsicht weist der erste Teil des Körpers **1** (derjenige, dessen längere Seiten in der Seitenansicht horizontal ausgerichtet sind) die Form eines Quadrats auf; der zweite Teil des Körpers **1** (derjenige, der in der Seitenansicht mit der Horizontalen einen Winkel von **135°** einschließt) ist trapezförmig (siehe **Abb. 8**). Sämtliche Ecken des Körpers **1** sind abgerundet; der Körper **1** weist folglich keine scharfen Spitzen auf.

Der Körper **1** des Verbindungselements **12** enthält eine Durchgangsöffnung **4** zum Durchführen der Schraube **9.** Deren Achse ist in der Draufsicht senkrecht zur Längsachse des Körpers **1** des Verbindungselements **12** ausgerichtet.

Der Körper **1** enthält an jedem Ende der Durchgangsöffnung **4** eine Vertiefung **5** zum Versenken des Schraubenkopfes **11** der Schraube **9** (siehe **Abb. 1****,** **3****,** **4** **und** **7**). Es sind somit zwei Vertiefungen **5** vorhanden, eine links und eine rechts am Körper **1.** Die Durchgangsöffnung **4** weist insofern auf jeder Seite eine Senkung **5** für den Schraubenkopf **11** auf.

Jede Vertiefung **5** zum Versenken des Schraubenkopfes **11** enthält einen Boden **7** zum Kontakt mit dem Schraubenkopf **11.** Die Ebene des Bodens **7** der linken Vertiefung **5** bildet mit der Ebene des Bodens **7** der rechten Vertiefung **5** einen Winkel von **40°;** die Bodenebene **7** ist um **20°** gegenüber der vertikalen Längsebene geneigt. Die Achse der Schraube **9** zur Befestigung des Verbindungselements **12** an der Karosserie **14,** die durch die Durchgangsöffnung **4** geführt ist, ist in der Draufsicht um **20°** gegenüber der Senkrechten zur Längsachse des Verbindungselements **12** abgewinkelt (die Schraubenachse schließt in der Draufsicht mit der Längsachse des Verbindungselements **12** einen Winkel von **110°** ein, vgl. **Abb. 8**).

Jede Vertiefung **5** zum Versenken des Schraubenkopfes **11** enthält einen Boden **7** zum Kontakt mit dem Schraubenkopf **11.** Die Ebene des Bodens **7** der linken Vertiefung **5** bildet mit der Ebene des Bodens **7** der rechten Vertiefung 5 einen Winkel von **40°;** die Bodenebene **7** ist um **20°** gegenüber der vertikalen Längsebene geneigt. Die Achse der Schraube **9** zur Befestigung des Verbindungselements **12** an der Karosserie **14,** die durch die Durchgangsöffnung **4** geführt ist, ist in der Draufsicht um **20°** gegenüber der Senkrechten zur Längsachse des Verbindungselements **12** abgewinkelt (die Schraubenachse schließt in der Draufsicht mit der Längsachse des Verbindungselements **12** einen Winkel von **110°** ein, vgl. **Abb. 8**).

Das Verbindungselement **12** weist einen Zapfen **3** auf der linken und einen Zapfen 3 auf der rechten Seite des Körpers **1** auf. Beide Zapfen **3** sind zylindrisch ausgebildet und senkrecht zur jeweiligen Seitenwand des Körpers **1** angeordnet, an der sie unlösbar befestigt sind. Die Länge jedes Zapfens **3** beträgt **1 cm.**

Der Körper **1** des Verbindungselements **12** besteht in diesem Ausführungsbeispiel aus Kunststoff. Die Einsatzbuchse **2** mit der Öffnung **6** und Innengewinde zur Verschraubung eines Bauteils besteht aus Metall und ist unlösbar im Kunststoffkörper **1** vergossen.

Die metallische Einsatzbuchse **2** mit der Öffnung **6** ist zylindrisch (siehe **Abb. 1****,** **2****,** **4****,** **5****,** **6** **und** **7**). Die Gewindeöffnung **6** verläuft vollständig durch die Buchse **2;** die Achse der Gewindeöffnung **6** fällt mit der Zylinderachse der Buchse **2** zusammen.

In der Draufsicht steht die Achse der Durchgangsöffnung **4** des Körpers **1** rechtwinklig zur Achse der Gewindeöffnung **6** der Einsatzbuchse **2;** die Achse der Buchse **2** mit der Gewindeöffnung **6** liegt in der Symmetrieebene des Verbindungselements **12.**

Das oben beschriebene Verbindungselement **12** ist Teil des Kraftfahrzeugs **13.** Das Kraftfahrzeug **13** umfasst die Karosserie **14,** zwei hintere Scheinwerfer **18,** zwei Schrauben **19** zur Befestigung der Scheinwerfer **18,** zwei Schrauben **9** zur Befestigung der Verbindungselemente **12** und zwei formgleiche Verbindungselemente **12** wie zuvor beschrieben.

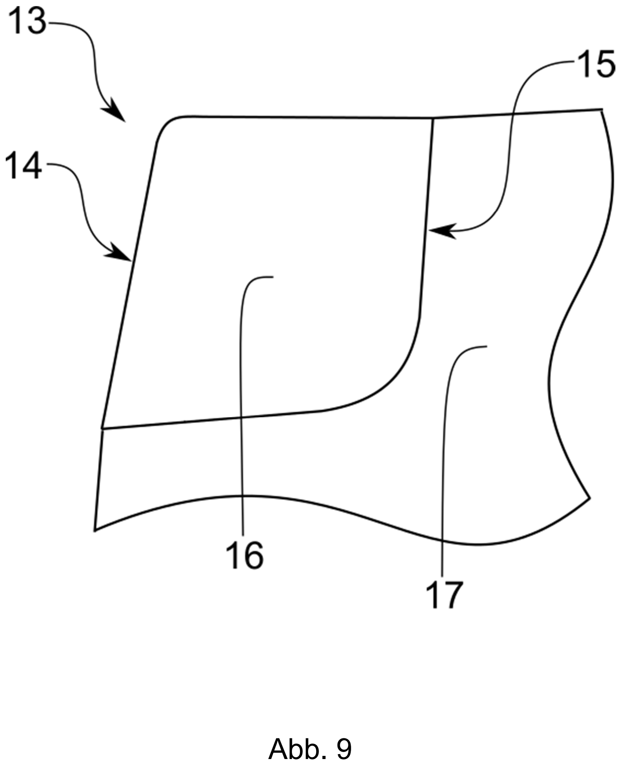

Die Karosserie **14** des Kraftfahrzeugs **13** weist zwei Aussparungen **15** für den hinteren Scheinwerfer **18** auf, eine links und eine rechts am Fahrzeug **13.** In diesem Ausführungsbeispiel ist die Karosserie **14** eine Limousinenkarosserie (Sedan). **Abb. 9** zeigt schematisch die linke Aussparung **15** für den Scheinwerfer **18.**

Beide Aussparungen **15** für den Scheinwerfer **18** befinden sich im hinteren Karosseriebereich **14.** Die linke Aussparung **15** ist für den linken Rückscheinwerfer **18** bestimmt, die rechte Aussparung **15** für den rechten Rückscheinwerfer **18.**

Die linke Aussparung **15** ist durch die Karosserie **14** unten, hinten und rechts begrenzt; die rechte Aussparung **15** ist durch die Wände **16** unten, hinten und links begrenzt.

Die Wand **16** der linken Aussparung **15** weist eine Öffnung zum Durchführen des Zapfens **3** des Verbindungselements **12** sowie eine Öffnung zum Anschrauben des Verbindungselements **12** auf; Entsprechendes gilt für die rechte Aussparung **15.**

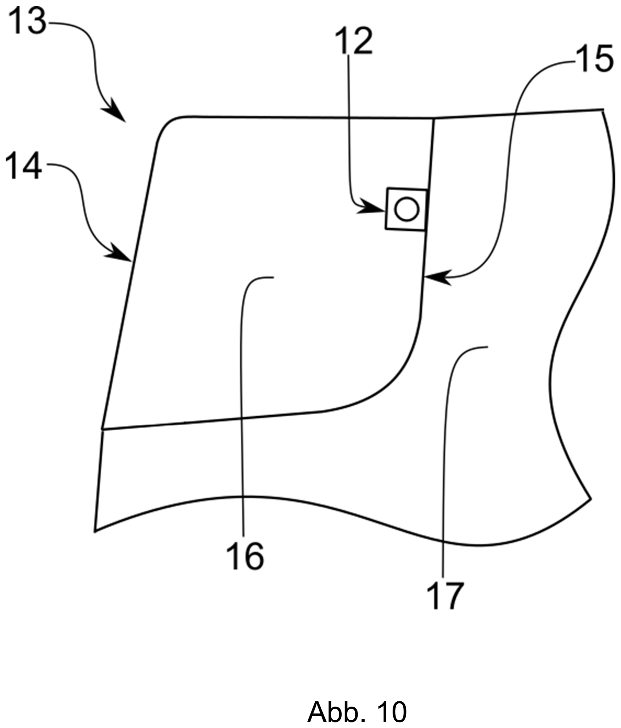

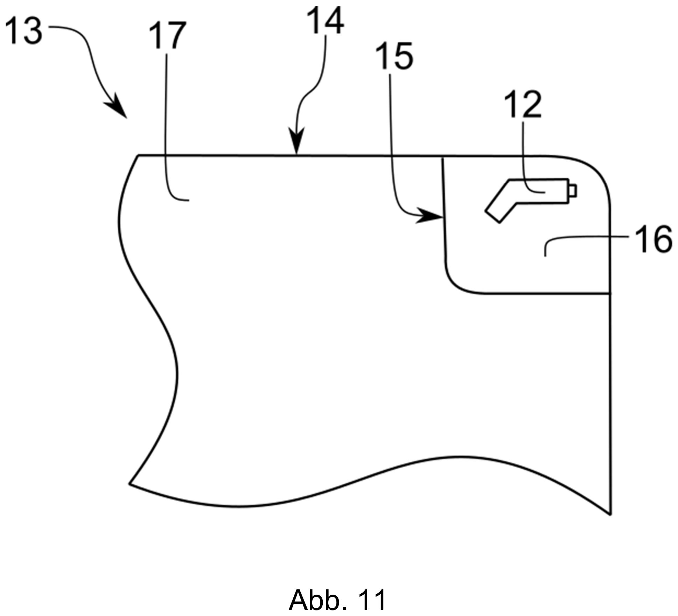

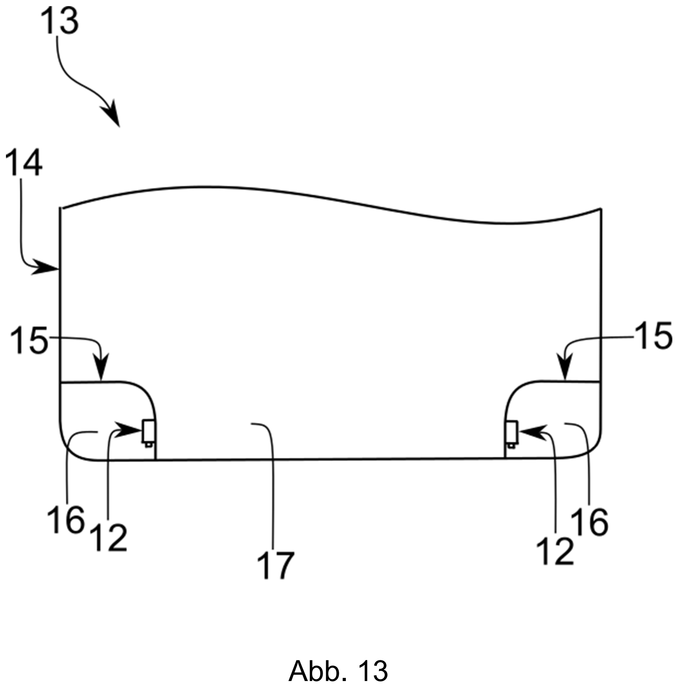

Das erste Verbindungselement **12** ist in der linken Aussparung **15** mit der ersten Schraube **9** an der Wand **16** befestigt; das zweite Verbindungselement **12** ist in der rechten Aussparung **15** mit der zweiten Schraube **9** befestigt (vgl. **Abb. 10****,** **11****,** **12** **und** **13**). In der Draufsicht weicht die Achse der Schraube **9,** die durch die Durchgangsöffnung **4** des Körpers **1** geführt wird, von der Achse der Durchgangsöffnung **4** ab; hier beträgt die Abweichung **20°.** Der Durchmesser der Durchgangsöffnung **4** ist größer als der Durchmesser des Schafts **10** der Schraube **9,** jedoch kleiner als der Durchmesser des Schraubenkopfes **11.**

Der freie Zapfen **3** des ersten Verbindungselements **12** (d. h. der nicht in die Zapfenöffnung der linken Aussparung **15** eingeführte Zapfen) ragt in den Raum der linken Aussparung **15** zur Befestigung des Scheinwerfers **18** und steht mit diesem in Kontakt. Entsprechendes gilt für den freien Zapfen **3** des zweiten Verbindungselements **12** in der rechten Aussparung **15.**

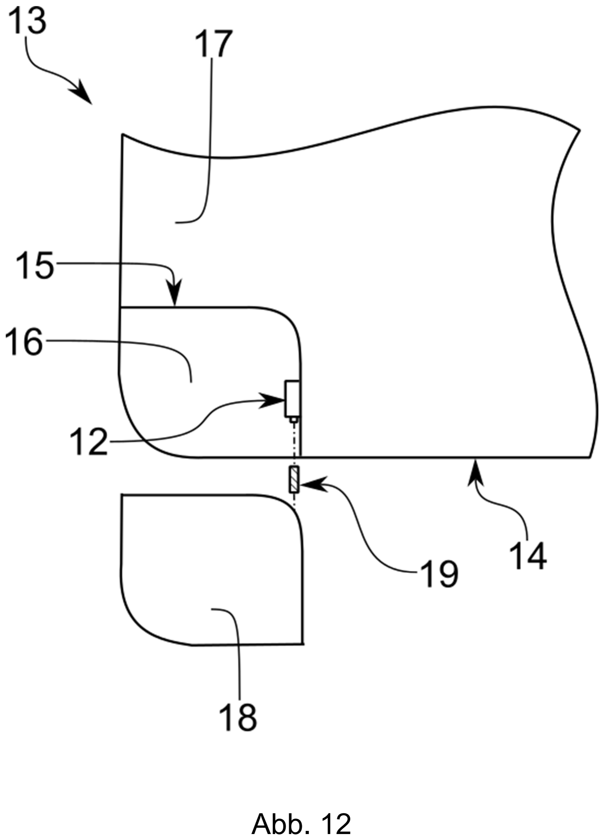

Der Scheinwerfer **18** ist mittels einer Schraube **19** am Verbindungselement **12** befestigt, das wiederum an der Karosserie **14** angebracht ist (siehe **Abb. 12**). Der Scheinwerfer **18** ist in die Aussparung **15** eingesetzt und am Verbindungselement **12** verschraubt. Die Aussparung **15** ist komplementär zum Scheinwerfer **18** geformt; zwischen dem äußeren Karosserieteil **17** und dem Scheinwerfer **18** besteht kein Spalt.

Der linke Rückscheinwerfer **18** ist in der linken hinteren Aussparung **15** befestigt, der rechte Rückscheinwerfer **18** in der rechten hinteren Aussparung **15;** beide sind in Form und Abmessungen spiegelbildlich identisch.

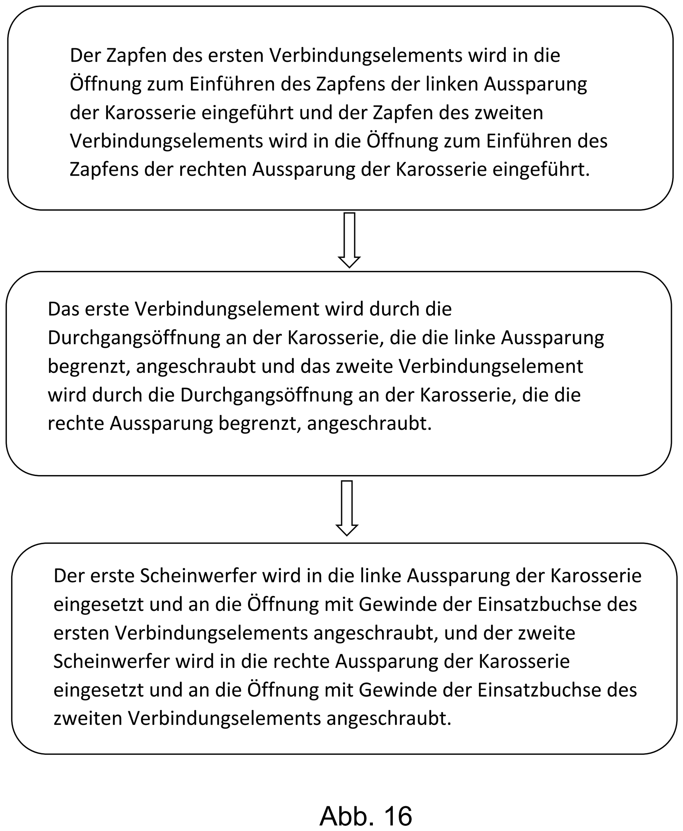

Das Montageverfahren der Scheinwerfer **18** an der Karosserie **14** unter Verwendung der oben beschriebenen Verbindungselemente **12** umfasst (in dieser Reihenfolge) den Schritt der Befestigung formgleicher Verbindungselemente **12** an der Karosserie **14** des Fahrzeugs **13** sowie den Schritt der Befestigung der Scheinwerfer **18** in den Aussparungen **15** der Karosserie **14** (siehe Schema **Abb. 16**).

Im Schritt der Befestigung der zwei formgleichen Verbindungselemente **12** an der Karosserie **14** wird der Zapfen **3** des ersten Verbindungselements **12** in die Zapfenöffnung der linken Aussparung **15** eingeführt und der Zapfen **3** des zweiten Verbindungselements **12** in die Zapfenöffnung der rechten Aussparung **15** eingeführt; anschließend werden beide Verbindungselemente **12** über die jeweilige Durchgangsöffnung **4** an den begrenzenden Karosseriewänden **16** angeschraubt. Das Einführen der Zapfen erfolgt vor dem Verschrauben; das Anschrauben beider Verbindungselemente **12** kann gleichzeitig erfolgen.

Im Schritt der Befestigung der Scheinwerfer **18** werden der erste Scheinwerfer **18** in die linke Aussparung **15** eingesetzt und an der Gewindeöffnung **6** der Einsatzbuchse **2** des ersten Verbindungselements **12** angeschraubt; entsprechend wird der zweite Scheinwerfer **18** in die rechte Aussparung **15** eingesetzt und an der Gewindeöffnung **6** der Einsatzbuchse **2** des zweiten Verbindungselements **12** angeschraubt. In diesem Ausführungsbeispiel wird jeder Scheinwerfer **18** mittels einer Schraube **19** an der Einsatzbuchse **2** des jeweiligen Verbindungselements **12** verschraubt; das Einsetzen und Verschrauben beider Scheinwerfer kann gleichzeitig erfolgen.

### Alternative Ausführungsformen

In einer alternativen Ausführung weist das Verbindungselement **12** zwei Durchgangsöffnungen **4** zum Durchführen der Schraube **9** auf.

In einer weiteren alternativen Ausführung umfasst das Verbindungselement **12** insgesamt vier Zapfen **3.** Zwei Zapfen **3** befinden sich auf der linken Seite des Körpers **1,** zwei Zapfen **3** auf der rechten Seite des Körpers **1.** Die Karosserie **14,** die die linke Aussparung **15** für den Scheinwerfer **18** begrenzt, enthält zwei Öffnungen zum Einführen der Zapfen **3** des Verbindungselements **12;** Entsprechendes gilt für die Karosserie **14,** die die rechte Aussparung **15** begrenzt.

In einer weiteren alternativen Ausführung sind an der die linke Aussparung **15** für den Scheinwerfer **18** begrenzenden Karosserie **14** zwei Verbindungselemente **12** befestigt; an der die rechte Aussparung **15** begrenzenden Karosserie **14** sind weitere zwei Verbindungselemente **12** befestigt. Das Kraftfahrzeug **13** umfasst somit insgesamt vier Verbindungselemente **12.** Der linke Rückscheinwerfer **18** ist an zwei in der linken Aussparung **15** befestigten Verbindungselementen **12** verschraubt; der rechte Rückscheinwerfer **18** entsprechend an zwei in der rechten Aussparung **15** befestigten Verbindungselementen **12.**

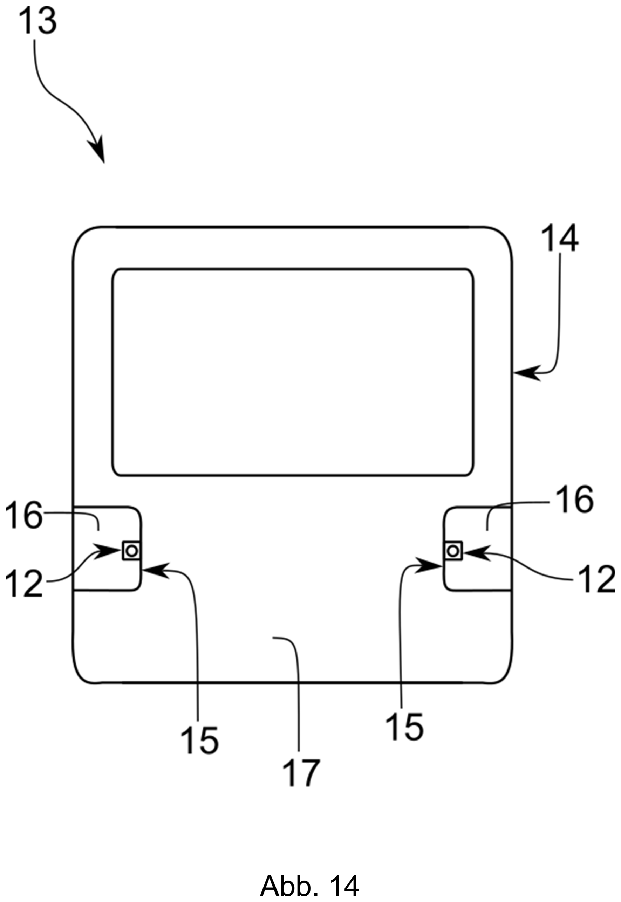

In einer weiteren alternativen Ausführung ist das Kraftfahrzeug 13 ein Fahrzeug des Typs Hatchback (siehe **Abb. 14**).

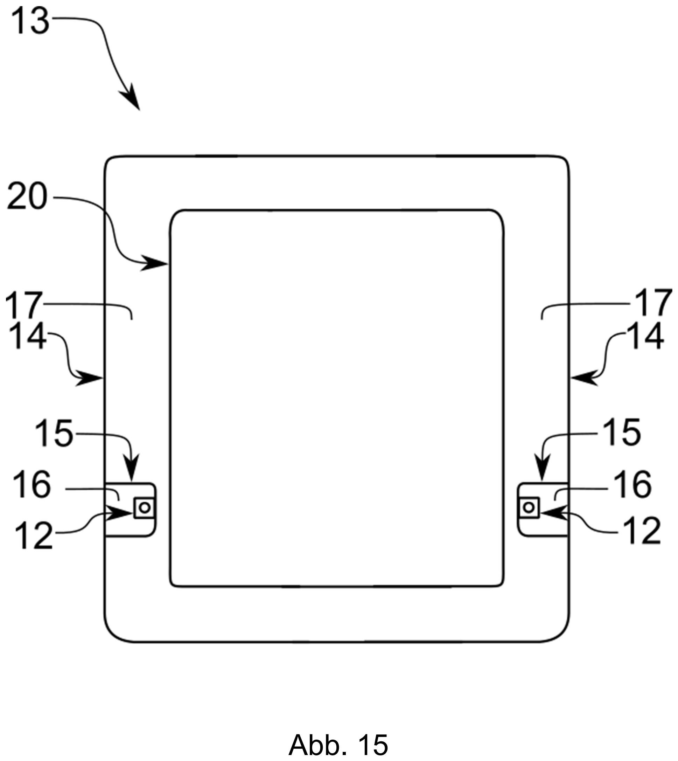

In einer weiteren alternativen Ausführung ist die Karosserie **14** die Heckklappe eines Kraftfahrzeugs **13** des Typs Hatchback (siehe **Abb. 15**).

In einer weiteren alternativen Ausführung enthält das Verbindungselement **12** keine Zapfen **3.**

In einer weiteren alternativen Ausführung hat der Körper 1 des Verbindungselements **12** die Form eines Quaders mit abgerundeten Ecken.

### Bezugszeichenliste

- 1 -: Körper;
- 2 -: Einsatzbuchse;
- 3 -: Zapfen;
- 4 -: Durchgangsöffnung für Schraube;
- 5 -: Vertiefung zum Versenken des Schraubenkopfes;
- 6 -: Öffnung mit Gewinde;
- 7 -: Boden;
- 9 -: Schraube;
- 10 -: Schraubenschaft;
- 11 -: Schraubenkopf;
- 12 -: Verbindungselement;
- 13 -: Kraftfahrzeug;
- 14 -: Karosserie;
- 15 -: Aussparung für Scheinwerfer;
- 16 -: (Begrenzungs-)Wand der Aussparung;
- 17 -: Außenbereich der Karosserie;
- 18 -: Scheinwerfer;
- 19 -: Schraube zur Befestigung des Scheinwerfers.

## Patentansprüche

1. Verbindungselement (12) zur Befestigung eines Bauteils an der Karosserie (14) eines Kraftfahrzeugs (13), **dadurch gekennzeichnet, dass**
• es einen Körper (1) mit mindestens einer Durchgangsöffnung (4) zum Durchführen einer Schraube (9) umfasst, wobei der Körper (1) an jedem Ende der Öffnung (4) zum Durchführen der Schraube (9) eine Vertiefung (5) zum Versenken des Schraubenkopfes (11) aufweist, und
• dass das Verbindungselement (12) weiterhin eine Einsatzbuchse (2) mit einer Öffnung (6) mit Innengewinde zur Verschraubung eines Bauteils umfasst, wobei die Einsatzbuchse (2) mit Öffnung (6) am Körper (1) befestigt ist, wobei
• die Achse der Öffnung (6) der Einsatzbuchse (2) bei Betrachtung senkrecht zur Achse der Öffnung (6) der Einsatzbuchse (2) und zur Achse der Durchgangsöffnung (4) zum Durchführen der Schraube (9) mit der Achse der Durchgangsöffnung (4) zum Durchführen der Schraube (9) einen Winkel von 90° einschließt,
• wobei der Körper (1) mit der Einsatzbuchse (2) mit Öffnung (6) ebenensymmetrisch zu der Ebene ist, in der die Achse der Öffnung (6) der Einsatzbuchse (2) liegt.

2. Verbindungselement (12) nach Anspruch 1, **dadurch gekennzeichnet, dass** der Körper (1) mindestens zwei Zapfen (3) zur Sicherstellung der Orientierung des Verbindungselements (12) gegenüber der Karosserie (14) des Kraftfahrzeugs (13) aufweist, wobei der erste Zapfen (3) auf der linken Seite des Körpers (1) und der zweite Zapfen (3) auf der rechten Seite des Körpers (1) angeordnet ist.

3. Verbindungselement (12) nach einem der Ansprüche 1 oder 2, **dadurch gekennzeichnet, dass** der Körper (1) aus Kunststoff besteht und die Einsatzbuchse (2) mit Öffnung (6) aus Metall gefertigt ist.

4. Verbindungselement (12) nach einem der Ansprüche 1 bis 3, **dadurch gekennzeichnet, dass** jede Vertiefung (5) zum Versenken des Schraubenkopfes (11) einen Boden zum Kontakt mit dem Schraubenkopf (11) aufweist, wobei die Ebene des Bodens der Vertiefung (5) zum Versenken des Schraubenkopfes (11) auf der linken Seite des Körpers (1) des Verbindungselements (12) mit der Ebene des Bodens der Vertiefung (5) zum Versenken des Schraubenkopfes (11) auf der rechten Seite des Körpers (1) des Verbindungselements (12) einen Winkel von mindestens 10° einschließt.

5. Kraftfahrzeug (13), umfassendeine
• Karosserie (14), die mindestens zwei Aussparungen (15) zur Aufnahme von Scheinwerfern (18) aufweist, wobei eine Aussparung (15) zur Aufnahme eines Scheinwerfers (18) auf der linken Seite der Karosserie (14) und die andere Aussparung (15) zur Aufnahme eines Scheinwerfers (18) auf der rechten Seite der Karosserie (14) angeordnet ist,
• mindestens zwei Scheinwerfer (18) und
• mindestens zwei Schrauben (19) zur Befestigung der Scheinwerfer (18),
**dadurch gekennzeichnet, dass** das Kraftfahrzeug (13) weiterhin mindestens zwei Schrauben (9) zur Befestigung der Verbindungselemente (12) und mindestens zwei formgleiche Verbindungselemente (12) zur Befestigung eines Bauteils an der Karosserie (14) des Kraftfahrzeugs (13) nach einem der Ansprüche 1 bis 4 aufweist, wobei
• das erste Verbindungselement (12) an der linken Aussparung (15) der Karosserie (14) mit der ersten Schraube (9) zur Befestigung des Verbindungselements (12) befestigt ist und das zweite Verbindungselement (12) an der rechten Aussparung (15) der Karosserie (14) mit der zweiten Schraube (9) zur Befestigung des Verbindungselements (12) befestigt ist, wobei die Öffnung (4) zum Durchführen der Schraube (9) mit dem Gewinde der Einsatzbuchse (2) jedes Verbindungselements (12) nach außen aus der jeweiligen Aussparung (15) der Karosserie (14) zeigt,
• der erste Scheinwerfer (18) in der linken Aussparung (15) der Karosserie (14) angeordnet ist und mit der ersten Schraube (19) zur Befestigung des Scheinwerfers (18) an der Einsatzbuchse (2) mit Öffnung (6) des ersten Verbindungselements (12) befestigt ist und
• der zweite Scheinwerfer (18) in der rechten Aussparung (15) der Karosserie (14) angeordnet ist und mit der zweiten Schraube (19) zur Befestigung des Scheinwerfers (18) an der Einsatzbuchse (2) mit Öffnung (6) des zweiten Verbindungselements (12) befestigt ist.

6. Kraftfahrzeug (13) nach Anspruch 5, **dadurch gekennzeichnet, dass** die linke Aussparung (15) der Karosserie (14) mindestens eine Öffnung zum Einführen des Zapfens (3) des ersten Verbindungselements (12) und die rechte Aussparung (15) der Karosserie (14) mindestens eine Öffnung zum Einführen des Zapfens (3) des zweiten Verbindungselements (12) aufweist.

7. Kraftfahrzeug (13) nach Anspruch 5 oder 6, **dadurch gekennzeichnet, dass** die Orientierung des zweiten Verbindungselements (12), das in der rechten Aussparung (15) für den Scheinwerfer (18) befestigt ist, spiegelbildlich zur Orientierung des ersten Verbindungselements (12), das in der linken Aussparung (15) für den Scheinwerfer (18) befestigt ist, ist.

8. Kraftfahrzeug (13) nach einem der Ansprüche 5 bis 7, **dadurch gekennzeichnet, dass** der Kopf (11) der Schraube (9) mit dem Boden der Vertiefung (5) zum Versenken des Schraubenkopfes (11) in Kontakt steht, wobei die Achse des Schafts (10) der Schraube (9) bei Betrachtung senkrecht zur Achse des Schafts (10) der Schraube (9) und zur Achse der Öffnung (4) des Körpers (1) des Verbindungselements (12) von der Achse der Öffnung (4) des Körpers (1) des Verbindungselements (12) um mindestens 5° abweicht.

9. Verfahren zur Montage von Scheinwerfern (18) an der Karosserie (14) eines Kraftfahrzeugs (13) unter Verwendung von mindestens zwei formgleichen Verbindungselementen (12) nach einem der Ansprüche 1 bis 4, **dadurch gekennzeichnet, dass** es
• den Schritt der Befestigung von zwei formgleichen Verbindungselementen (12) an der Karosserie (14) umfasst, wobei in diesem Schritt das erste Verbindungselement (12) durch die Öffnung (4) zum Durchführen der Schraube (9) an dem Teil der Karosserie (14), der die linke Aussparung (15) für den Scheinwerfer (18) abgrenzt, angeschraubt wird und das zweite Verbindungselement (12) durch die Öffnung (4) zum Durchführen der Schraube (9) an dem Teil der Karosserie (14), der die rechte Aussparung (15) für den Scheinwerfer (18) abgrenzt, angeschraubt wird, wobei in diesem Schritt das zweite Verbindungselement (12) spiegelbildlich zum ersten Verbindungselement (12) ausgerichtet wird, und
• den Schritt der Befestigung der Scheinwerfer (18) in den Aussparungen (15) der Karosserie (14) des Kraftfahrzeugs (13), wobei der erste Scheinwerfer (18) in die linke Aussparung (15) der Karosserie (14) eingesetzt und an der Öffnung (6) mit Gewinde der Einsatzbuchse (2) des ersten Verbindungselements (12) angeschraubt wird und der zweite Scheinwerfer (18) in die rechte Aussparung (15) der Karosserie (14) eingesetzt und an der Öffnung (6) mit Gewinde der Einsatzbuchse (2) des zweiten Verbindungselements (12) angeschraubt wird.

10. Verfahren zur Montage von Scheinwerfern (18) an der Karosserie (14) eines Kraftfahrzeugs (13) unter Verwendung von Verbindungselementen (12) nach Anspruch 9, **dadurch gekennzeichnet, dass** im Schritt der Befestigung der Verbindungselemente (12) an der Karosserie (14) der Zapfen (3) des Verbindungselements (12) der linken Aussparung (15) der Karosserie (14) in die Öffnung zum Einführen des Zapfens (3) zur Sicherstellung der Orientierung des ersten Verbindungselements (12) gegenüber der Karosserie (14) des Kraftfahrzeugs (13) eingeführt wird und in die Öffnung zum Einführen des Zapfens (3) des Verbindungselements (12) der rechten Aussparung (15) der Karosserie (14) der Zapfen (3) zur Sicherstellung der Orientierung des zweiten Verbindungselements (12) gegenüber der Karosserie (14) des Kraftfahrzeugs (13) eingeführt wird.
